# EUROPÄISCHE PATENTSCHRIFT

(11) **EP 0 663 319 B1**
(45) Veröffentlichungstag und Bekanntmachung des Hinweises auf die Patenterteilung: **09.07.1997**
(21) Anmeldenummer: 95100060.3
(22) Anmeldetag: 03.01.1995
(51) Int. Cl.: B60P 7/12, B60P 1/44

(54) **Verfahren und Vorrichtung zum Sichern von Rollbehältern oder ähnlichen rollfähigen Lasten gegen Abrollen von einer Transportvorrichtung**
Method and device to prevent roller containers or similar rolling loads from rolling off from a transportation device
Procédé et dispositif pour empêcher des conteneurs roulants ou charges roulantes similaires de rouler d'un dispositif de transport

(30) Priorität: 07.01.1994 DE 4400238
(43) Veröffentlichungstag der Anmeldung: 19.07.1995
(73) Patentinhaber: Bär, Gerd, D-74078 Heilbronn (DE)
(72) Erfinder: Bär, Gerd, D-74078 Heilbronn (DE)
(74) Vertreter: Lauerwald, Jörg, Dipl.-Phys.

(56) Entgegenhaltungen:
- EP-A- 0 487 145
- DE-A- 3 528 116
- DE-A- 4 207 382
- DE-U- 7 533 632
- DE-U- 8 632 891
- FR-A- 2 244 645

## Beschreibung

Die Erfindung betrifft ein Verfahren zum Sichern von Rollbehältern oder ähnlichen rollfähigen Lasten gegen Abrollen von einer Transportvorrichtung, insbesondere von einer Ladebordwand, mittels einer Abrollsicherungseinrichtung, welche wenigstens zwei für zwei voneinander unabhängig auf- und abladbare, rollfähige Lasten vorgesehene, aus der Transportebene der Transportvorrichtung hoch- und wieder in die Transportebene einklappbare Sicherungsklappen umfaßt.

Weiter betrifft die Erfindung eine Vorrichtung zur Sicherung von Rollbehältern oder sonstigen rollfähigen Lasten gegen ein Abrollen von der Transportebene einer Transporteinrichtung, insbesondere einer Ladebordwand eines Lkw's, umfassend wenigstens zwei für zwei voneinander unabhängig auf- und abladbare, rollfähige Lasten vorgesehene, aus der Transportebene hoch- und wieder in die Transportebene einklappbare Sicherungsklappen, die in Öffnungsrichtung unter einer Belastung, vorzugsweise einer Federbelastung, stehen und eine sie in Schließstellung haltende, entriegelbare, vorzugsweise in Verriegelungsrichtung unter einer Belastung, vorzugsweise einer Federbelastung, stehende Verriegelungseinrichtung aufweisen.

Es sind gattungsgemäße Verfahren und Vorrichtungen der obengenannten Art bereits bekannt. Beispielsweise aus der FR-A-2 372 104, der DE-U-76 37 158 und der DE-U-7 533 632. Die ersten beiden Druckschriften zeigen Abrollsicherungseinrichtungen, bei denen die entsprechenden Sicherungsklappen mit Schwenkhebeln ausgestellt oder wieder eingeklappt werden. Die Transportebene besteht dabei aus einem doppelwandigen bzw. doppelbödigen Hohlprofil, wobei die jeweiligen Sicherungsklappen aus dem oberen Boden dieses Profils ausgeschnitten sind und daher in hochgestellter Position entsprechende Löcher in dem Hohlprofil öffnen. Zwischen den Sicherungsklappen verbleiben daher unter Umständen nur schmale Reste des oberen Bodens des Hohlprofiles, so daß der obere Boden des Hohlprofiles durch die aufgrund der Sicherungsklappen entstehenden Löcher geschwächt ist. Bei Belastung der Plattform im Überfahrbetrieb mit schweren E-Gabelhubwagen kann es somit zum Reißen der zwischen den Löchern bestehenden Restmaterialbrücken kommen, das zur Zerstörung der Plattform führt. Dieser Einsatzfall entsteht dadurch, daß die Beladung des Lkw an der Rampe über die Plattform mit E-Gabelhubwagen erfolgt. Diese transportieren bis zu drei Rollbehälter auf einmal, bei hohem Eigengewicht (Batterien).

Die EP-B-0 271 441 und die DE-U-86 32 891 zeigen unter Berücksichtigung des vorgenannten Problemes eine Ladebordwand, die eine Transportebene bildet und eine Abrollsicherungseinrichtung aufweist. Bei dieser Ausbildungsform sind die Sicherungsklappen der Abrollsicherungseinrichtung nicht aus dem oberen Boden der doppelbödigen Ladebordwand herausgeschnitten und hinterlassen beim Öffnen keine Löcher, sondern der obere Boden ist lediglich abgesenkt und bildet somit eine Einsenkung, in der sich die jeweilige Sicherungsklappe (zusätzlich) einschmiegt. Die geschlossene Doppelbödigkeit verbleibt bei diesen Vorrichtungen somit trotz der vorhandenen Sicherungsklappen, so daß eine wesentlich bessere Stabilität der Ladebordwand gegeben ist, diese also nicht so anfällig ist für Beschädigungen durch schwere Lasten.

Die EP-A-0 487 145 zeigt in erster Linie eine Abrollsicherungseinrichtung, bei der die Sicherungsklappen bestimmte Querschnittsprofile aufweisen, vorzugsweise eine C-Form, die im doppelbödigen Hohlprofil der Transporteinrichtung einklappbar ist und in ihren C-Ausbuchtungen insbesondere raumsparend einerseits Elemente der Verriegelungseinrichtung der Sicherungsklappe aufnimmt, andererseits die Anlenkungsachsen der Sicherungsklappe. Eine doppelbödige Ausbildung auch im Bereich der Sicherungsplappen ist durch diese besondere Form der Sicherungsklappen nicht möglich und nicht vorgesehen.

Hervorgehoben wird in der genannten Druckschrift auch noch, daß die Sicherungsklappe und die beidseitig angrenzenden Lagerungsbereiche für die Schwenkachsen der Sicherungsklappe Teile desselben Profils sind. An den seitlich benachbarten festen Profilteilen wird nicht nur die Sicherungsklappe angelenkt, sondern es befinden sich in diesen Bereichen auch die Betätigungsorgane für die Auslösung der Verriegelungseinrichtung der jeweiligen Sicherungsklappe. Genau dies ist aber letztendlich problematisch und ist auch in ähnlicher Weise bei den zuvor zitierten Druckschriften gegeben.

Abrollsicherungseinrichtungen der in Rede stehenden Art werden insbesondere im Bereich von Ladebordwänden von Lkw's benutzt. Zum Be- und Entladen des Lkw werden jeweils die Ladebordwände aus ihrer vertikalen Position, in der sie einen Teil der Bordwand bilden, in eine waagerechte Position umgeschwenkt, in der sie als Hubeinrichtung genutzt werden können. Besonders häufig werden derartige Ladebordwände benutzt, wenn zum Beispiel ein Supermarkt oder dergleichen beliefert werden soll. Es werden dann häufig Rollbehälter verwendet, in die verschiedene Kartons oder Pakete hineingepackt werden. Diese Rollbehälter werden dann zum Beladen des Lkw auf die Ladebordwand gestellt und mit der Ladebordwand auf die Höhe der Transportfläche des Laderaums gehoben. Nach Möglichkeit werden mehrere Rollbehälter auf die Ladebordwand gefahren, bevor diese angehoben wird. Theoretisch hätten bis zu etwa sechs übliche Rollbehälter auf einer solchen Ladebordwand Platz. Da in der Position, in der die Rollbehälter auf die Ladebordwand gefahren werden oder von dieser heruntergefahren werden, die Transportebene der Ladebordwand etwas schräg nach unten von dem Lkw weg verläuft, müssen Abrollsicherungen vorhanden sein, damit die auf der Ladebordwand stehenden Rollbehälter nicht von dieser selbständig herunterrollen. Die herkömmlichen Abrollsicherungen benötigen jedoch Platz, insbesondere auch für ihre Betätigungsorgane, so daß deshalb meistens nicht mehr als vier Abrollsichrungen vorgesehen werden können, also vier Rollbehälter in zwei Zeilen (quer zur Längsachse des Lkw) zu jeweils zwei Rollbehältern auf der Ladebordwand angeordnet werden können. Zusätzlich muß berücksichtigt werden, daß die erste, die von der Ladefläche des Lkw weiter entfernte Zeile jedesmal durchfahren werden muß, wenn Rollbehälter in die oder aus der zweiten Zeile verfahren werden sollen.

Ausgelöst, d.h. entriegelt bzw. hochgeklappt, werden die Sicherungsklappen zunächst einmal, wenn die Ladebordwand beladen werden soll, und zwar in der Regel bevor die Ladebordwand beladen wird. Dazu werden die Sicherungsklappen hochgestellt, und die jeweilige Verriegelungseinrichtung wird so entlastet, daß sie immer in Öffnungsstellung verbleibt, so daß die jeweilige Sicherungsklappe nach einem Überfahren in einem Rollbehälter sofort selbsttätig wieder hochklappt und eine Art Rückschlagsicherung bildet. Demgegenüber bleibt beim Entladevorgang die Verriegelungseinrichtung belastet. Außer Funktion gesetzt wird die Sicherungsklappe durch ein Niedertreten, durch das sie dann sofort einrastet, damit sie mit dem Rollbehälter in Entladungsrichtung überfahren werden kann.

Bereits bekannte Abrollsicherungen gemäß der EP-A 0 487 145 und der DE-B 35 28 116 weisen daher entsprechend zwei Betätigungsfunktionen auf. Diese Betätigungen müssen aber jeweils für jede Sicherungsklappe vor dem Entladen oder dem Beladen vorgenommen werden. Es müssen also von dem Bediener der Ladebordwand, beispielsweise jeweils vier Sicherungsklappen betätigt werden, und es muß außerdem natürlich noch von einem bestimmten Stellplatz aus die Ladebordwand selbst betätigt werden, nämlich als Hubeinrichtung.

Somit ergeben sich allein aufgrund der vorhandenen Betätigungsorgane beim Stand der Technik drei Probleme:

Die Betätigungsorgane benötigen Platz in der Transportebene, so daß nur für zwei Rollbehälter nebeneinander in einer Zeile Abrollsicherungen vorgesehen werden können, die Ladebordwand also mit ihrem Platzangebot nicht vollständig für Rollbehälter genutzt werden kann. Außerdem unterliegen die Betätigungsorgane in der Transportebene einer Beschädigungsgefahr durch beispielsweise E-Gabelhubwagen mit extrem hoher Rollenlast oder durch Anfahren/Anstoßen nicht weit genug angehobener Paletten. Das dritte Problem besteht darin, daß der Benutzer der Ladebordwand, der zumeist allein ist, nicht nur die Ladebordwand betätigen muß, sondern jedesmal vier Abrollsicherungen betätigen muß.

Aus der bereits zitierten DE-B-35 28 116 ist eine pneumatische Betätigung von (geteilten) Sicherungsklappen von Abrollsicherungen bekannt. Hier werden jeweils die beiden Teile der Sicherungsklappe einer Abrollsicherung, über eine Welle miteinander verbunden, durch einen Pneumatikzylinder betätigt, der unterhalb der Transportebene versteckt ist. Somit ist eines der vorerwähnten Probleme bei dieser bekannten Vorrichtung nicht mehr vorhanden, nämlich die Beschädigungsgefahr des Betätigungsorgans. Die übrigen Probleme verbleiben jedoch.

Bei der Vorrichtung gem. DE-U-7 637 158 können zwei Sicherungsklappen gemeinsam verriegelt werden, d.h. außer Funktion gesetzt werden. In Funktion gesetzt werden können aber nur einzelne Sicherungsklappen.

Bei der Vorrichtung gemäß der DE-U-7 533 632 fehlt es bereits überhaupt an einer bequem zu bedienenden Verriegelungseinrichtung.

Ausgehend von dem zitierten Stand der Technik liegt der Erfindung die Aufgabe zugrunde, ein Verfahren und eine Vorrichtung zum Sichern von rollenden Lasten gegen Abrollen von einer Transporteinrichtung aufzuzeigen, deren Betätigungsfunktion die Nutzung der Transporteinrichtung selbst weniger beeinträchtigen.

Diese Aufgabe wird verfahrensmäßig dadurch gelöst, daß die wenigstens zwei unabhängig voneinander sichernden Sicherungsklappen gemeinsam bzw. gleichzeitig betätigt, nämlich für ein Hochklappen entriegelt und in die Sicherungsstellung hochgeklappt werden.

Dadurch ist es mit Vorteil möglich, die Bedienungsperson zu entlasten, indem sie für die Betätigung der Abrollsicherungen nur weniger Arbeitszeit braucht und sich stärker um die Bedienung der Transporteinrichtung selbst kümmern kann, und außerdem entfällt hierdurch mindestens ein Betätigungsorgan, so daß mehr Platz für die Ausbildung der Sicherungsklappen verbleibt, bzw. für das Vorsehen einer weiteren Sicherungsklappe durch den gesparten Raumbedarf, und es vermindert sich das Beschädigungsrisiko beim Ladevorgang, weil vorzugsweise natürlich zumindest das Betätigungsorgan entfallen kann, welches sonst in einem Bereich anzuordnen wäre, der am häufigsten oder am leichtesten bei der Beladung frequentiert wird.

Nach Weiterbildung des erfindungsgemäßen Verfahrens ist vorgesehen, daß bei in mehreren Zeilen angeordneten Sicherungsklappen die Sicherungsklappen einer Zeile gemeinsam bzw. gleichzeitig betätigt werden. Vorzugsweise werden alle vorhandenen Sicherungsklappen in einem gemeinsamen Betätigungsbereich, also zentral, betätigt. Hierdurch wird die Bedienungsperson weiter entlastet und auch der Raumbedarf der Betätigungseinrichtung vermindert, der somit mit Vorteil dem Ladevorgang und weiteren Abrollsicherungen zur Verfügung steht.

In vorrichtungsmäßiger Weise wird die gestellte Aufgabe erfindungsgemäß unabhängig und selbständigen Schutz beanspruchend gelöst durch ein gemeinsames Entriegelungsorgan zur gemeinsamen bzw. gleichzeitigen Entriegelung wenigstens zweier Sicherungsklappen, und zwar mit den zum erfindungsgemäßen Verfahren erwähnten Vorteilen.

Entsprechend des erfindungsgemäßen Verfahrens ist durch Weiterbildung des weiteren vorgesehen, daß die Vorrichtung in wenigstens zwei Zeilen jeweils wenigstens zwei nebeneinander angeordnete Sicherungsklappen zur Sicherung von Zeilen von rollfähigen Lasten aufweist und daß die zu einer Zeile gehörenden Sicherungsklappen ein gemeinsames Betätigungsorgan aufweisen, vorzugsweise sämtliche Sicherungsklappen einen gemeinsamen (zentralen) Betätigungsbereich für die Betätigungsorgane aufweisen.

Jede der Sicherungsklappen ist vorzugsweise so lang ausgebildet, daß sie sich über die gesamte voraussichtliche Breite der zu sichernden Last durchgehend erstreckt, weil geteilte Sicherungsklappen, die nur die jeweilige Fahrspur, beispielsweise eines Rollbehälters sichern, den Nachteil haben, daß mit dem (schweren) Rollbehälter sehr genau hinsichtlich der Spur gezielt werden muß bzw. der Rollbehälter sehr genau plaziert werden muß, weil er sonst nicht ausreichend gesichert ist.

Trotz dieser durchgehenden, langen Ausbildung der jeweiligen Sicherungsklappe steht durch die Zentralisierung der Betätigung der Sicherungsklappen mehr Raum zur Verfügung, als beim Stand der Technik, so daß nach einer Weiterbildung der Erfindung mit Vorteil vorgesehen sein kann, daß in wenigstens einer Zeile zur Anordnung an einer herkömmlichen Ladebordwand drei (statt zwei) sich jeweils über die Lastbreite erstreckende Sicherungsklappen vorgesehen sind. Die Ladebordwand oder sonstige Transporteinrichtung kann somit mit Vorteil ökonomisch für mehr Lasten ausgenutzt werden.

Eine andere Weiterbildung der Erfindung sieht vor, daß das bzw. jedes Betätigungsorgan ein Arbeitszylinder, vorzugsweise ein Pneumatikzylinder, ist. Nach einer anderen Weiterbildung ist die Verwendung einer elektrischen Einrichtung vorgesehen. Insbesondere bei Verwendung eines Pneumatikzylinders mit dem entsprechenden Steuerungskreislauf oder einer elektrischen Einrichtung, aber gegebenenfalls auch bei anderen Versionen, kann nach einer weiteren Weiterbildung der Erfindung vorgesehen sein, daß für die Auslösung des Betätigungsorganes bzw. der Betätigungsorgane eine, vorzugsweise von der Betätigung und/oder vom Zustand der Transporteinrichtung abhängige Zwangsauslösung vorgesehen und sichergestellt ist. Die Betätigung der Abrollsicherungen kann also zwangsweise mit der Betätigung beispielsweise der Ladebordwand gekoppelt werden, so daß sichergestellt ist, daß der Benutzer beim Be- oder Entladen der Ladebordwand nicht vergißt, die Abrollsicherungen in die entsprechende Funktion zu setzen. Abgeschaltet werden könnte die Zwangsauslösung für den Fall, daß keine rollfähigen Lasten transportiert werden.

Vorzugsweise wird das Betätigungsorgan bzw. die Betätigungsorgane so angeordnet, daß sie in einem oder mehreren Randbereichen oder außerhalb des Bereiches der Transportebene angeordnet ist bzw. sind. Mechanische Betätigungseinrichtungen werden in der Regel am Rand beispielsweise einer Ladebordwand angeordnet werden, während pneumatische oder elektrische Ausführungen in einen ganz anderen Bereich verlagert werden können. Die Betätigungsorgane für alle Abrollsicherungen befinden sich vorzugsweise im Bedienungsbereich der Transporteinrichtung selbst, vorzugsweise im Standbereich der Fußsteuerung einer Ladebordwand, und sind vorzugsweise selbst als Fußbetätigungsorgane ausgebildet. Der Benutzer kann daher mit Vorteil die Transporteinrichtung und die Abrollsicherungen gleichzeitig bzw. zumindest im selben Bereich und auf gleiche Weise betätigen. Dadurch wird der Benutzer weiter bezüglicher der Arbeitszeit entlastet.

Um sicherzustellen, daß sich auch die vorhandenen Verriegelungseinrichtungen für die Sicherungsklappen in ihrer Platzbeanspruchung nicht nachteilig auswirken, insbesondere gegebenenfalls Raum für weitere Sicherungsklappen machen, ist nach einer Weiterbildung der Erfindung mit Vorteil vorgesehen, daß die der jeweiligen Sicherungsklappe zugeordnete Verriegelungseinrichtung unterhalb der Transportebene unterhalb der zugeordneten Sicherungsklappe vorzugsweise bezüglich der Längserstreckung der Sicherungsklappe etwa mittig, untergebracht ist.

Eine Zentralisierung bzw. Zusammenfassung von Betätigungseinrichtungen im Hinblick auf ein gemeinsames Betätigungsorgan ist bei einer pneumatischen oder elektrischen Einrichtung durch den Pneumatikkreislauf oder elektrische Leitungen ohne weiteres möglich. Bei einer mechanischen Version wird vorzugsweise dies mit Hilfe von Zugelementen, insbesondere mit Hilfe von Seilzügen erreicht, die insbesondere auch beliebig umgelenkt werden können.

Eine nächste Weiterbildung der Erfindung sieht vor, daß das bzw. jedes Betätigungsorgan wenigstens zwei Betätigungsstellungen bzw. -funktionen aufweist, nämlich eine, in der die Verriegelungseinrichtung einmal entriegelt ist, aber weiterhin unter ihrer (Feder-)Belastung verbleibt und in Schließstellung wieder (selbsttätig) verriegelt, und eine in der die Verriegelungseinrichtung entriegelt und die (Feder-) Belastung aufgehoben bzw. aufgefangen ist. Eine bevorzugte Ausführungsform sieht hierzu vor, daß als Betätigungsorgan ein Betätigungshebel vorgesehen ist, der in einer die zwei Stellungen vorgebenden, vorzugsweise etwa L-förmigen Kulisse geführt ist.

Eine andere Weiterbildung der Erfindung zeichnet sich dadurch aus, daß die Transportebene aus einer weitgehend hohlen Doppelplatte besteht und daß Elemente der Verriegelungs- und/oder der Betätigungseinrichtung in Hohlräumen der Doppelplatte untergebracht bzw. geführt sind. Eine nächste Weiterbildung sieht vor, daß die Transportebene aus einer weitgehend hohlen Doppelplatte besteht, daß die obere Plattenwandung im Bereich der Sicherungsklappe eine Einsenkung bildend abgesenkt ist und daß die Sicherungsklappe so angeordnet ist, daß sie sich in Schließstellung mit der Transportebene bündig fluchtend in diese Einsenkung einpaßt. Damit verbleibt der Vorteil einer doppelbödigen Transportebene, die auch durch die Sicherungsklappen nicht durchbrochen wird, sondern trotz der Sicherungsklappen eine ausreichende Stabilität gewährleistet. Diese Ausführungsform hat aber noch einen weiteren Vorteil.

Durch den Be- und Entladevorgang setzt sich auf der Transportebene leicht Schmutz ab, der unter Umständen auch in die Abrollsicherung eindringt und diese beeinträchtigt. Dies kann dazu führen, daß die Sicherungsklappen sich nicht mehr leichtgängig öffnen und schließen. Außerdem kann dies insbesondere dazu führen, daß die Sicherungsklappen nicht mehr korrekt schließen, sondern auch in Schließstellung etwas aus der Transportebene herausragen. Damit bieten die Sicherungsklappen dann aber Angriffspunkte für Beschädigungen. Bei der erfindungsgemäßen Ausführungsform fällt derartiger Schmutz nur in die Einsenkung, so daß derartiger Schmutz dazu führen kann, daß sich die Sicherungsklappe überhaupt nicht mehr schließen läßt. Dies fällt dem Benutzer natürlich besonders auf, und er ist wohl oder übel gefordert, diesen Schmutz zu entfernen, damit sich die Sicherungsklappe wieder schließen läßt. Die entsprechende Pflege der Abrollsicherung ist daher einfach, aber mit Vorteil auch erzieherisch gefordert, wodurch sich die Lebensdauer und die Beschädigungsfreiheit der Abrollsicherung vielleicht nicht zum Vorteil des Benutzers, aber zum Vorteil des Eigentümers verlängert.

Eine nächste Weiterbildung der Erfindung, für die auch selbständiger Schutz beansprucht wird, sieht vor, daß für die bzw. jede Sicherungsklappe eine Öffnungsstellung vorgesehen ist, bei der sie mit der Transportebene einen Winkel < 90°, vorzugsweise von etwa 40°, bildet.

Dieser kleinere Öffnungswinkel reicht für eine Abrollsicherung der jeweiligen Last völlig aus, da auch eine schräg gestellte Sicherungsklappe ein unüberwindbares Hindernis für die Last darstellt. Diese Schrägstellung hat aber einen Vorteil. Durch das Öffnen der Sicherungsklappe öffnet sich unterhalb der Sicherungsklappe, je nach Ausbildung, entweder ein Loch oder eine Einsenkung in der Transportebene. Steht die Sicherungsklappe weitgehend senkrecht, so wird dieses Loch bzw. diese Einsenkung völlig frei, so daß beispielsweise ein Rad eines Rollbehälters, der bis zur Sicherungsklappe rollt, sich in dieses Loch oder diese Einsenkung absenken kann. Hierdurch könnte der Rollbehälter verkanten und nicht mehr waagerecht stehen, was nachteilig wäre, oder zumindest müßte der Rollbehälter zunächst einmal in Richtung der Transportfläche des Lkw vorgefahren werden, damit sich die Sicherungsklappe zum Abladen des Rollbehälters überhaupt wieder schließen läßt, was zumindest mühsam wäre. Durch die erfindungsgemäße Schrägstellung der Sicherungsklappe ist statt dessen das Loch bzw. die Einsenkung so weit verdeckt, daß ein Rad eines Rollbehälters nicht hineingelangen kann, sondern vorher abgefangen wird.

Die Schrägstellung der Sicherungsklappe kann vorzugsweise dadurch erreicht werden, daß eine die Öffnungsstellung der Sicherungsklappe festlegende Anschlagsbegrenzung für die Sicherungsklappe vorhanden ist. Diese Anschlagsbegrenzung kann vorzugsweise unterhalb der Transportebene so angeordnet sein, daß sie in der Nähe der Schwenkachse in den Schwenkweg der Sicherungsklappe, vorzugsweise ihres Schwenklagers, einragt. Die Anschlagsbegrenzung kann also mit Vorteil im Hohlprofil selbst eingesetzt sein und so versteckt sein, daß sie überhaupt nicht auffällt und andere Funktionen auch nicht beeinträchtigt. Die Merkmale der Ansprüche 24 und 25 geben vorteilhafte und wichtige Schalldämpfungsmaßnahmen an.

Ausführungsbeispiele, aus denen sich weitere erfinderische Merkmale ergeben, sind in der Zeichnung dargestellt. Es zeigen:
- Fig. 1: eine Draufsicht auf eine Ladebordwand mit einem ersten Ausführungsbeispiel einer erfindungsgemäßen Abrollsicherungsvorrichtung,
- Fig. 2: eine entsprechende Draufsicht auf ein zweites Ausführungsbeispiel,
- Fig. 3: einen Schnitt durch einen eine Sicherungsklappe aufweisenden Bereich einer Ladebordwand mit der geöffneten Sicherungsklappe in Seitenansicht,
- Fig. 4: eine zur Fig. 3 querverlaufende Schnittansicht desselben Bereiches mit der Verriegelungseinrichtung der Sicherungsklappe,
- Fig. 5: einen Teil der Verriegelungseinrichtung gemäß Fig. 4 in einer zweiten Ansicht,
- Fig. 6: einen Ausschnitt aus einer Ladebordwand mit einer ersten Ansicht eines Betätigungsorgans für eine Sicherungsklappe,
- Fig. 7: das Betätigungsorgan in einer zweiten Ansicht,
- Fig. 8: einen Ausschnitt aus einer Ladebordwand mit einem eingelagerten Pneumatikzylinder als Betätigungsorgan in einer Seitenansicht,
- Fig. 9: den Pneumatikzylinder gemäß Fig. 8 in der Draufsicht,
- Fig. 10: den Pneumatikzylinder gemäß Fig. 8 und 9 in einer Stirnansicht und
- Fig. 11: ein Schaltbild des Pneumatikkreislaufes für zwei Pneumatikzylinder als Betätigungsorgane von Sicherungsklappen.

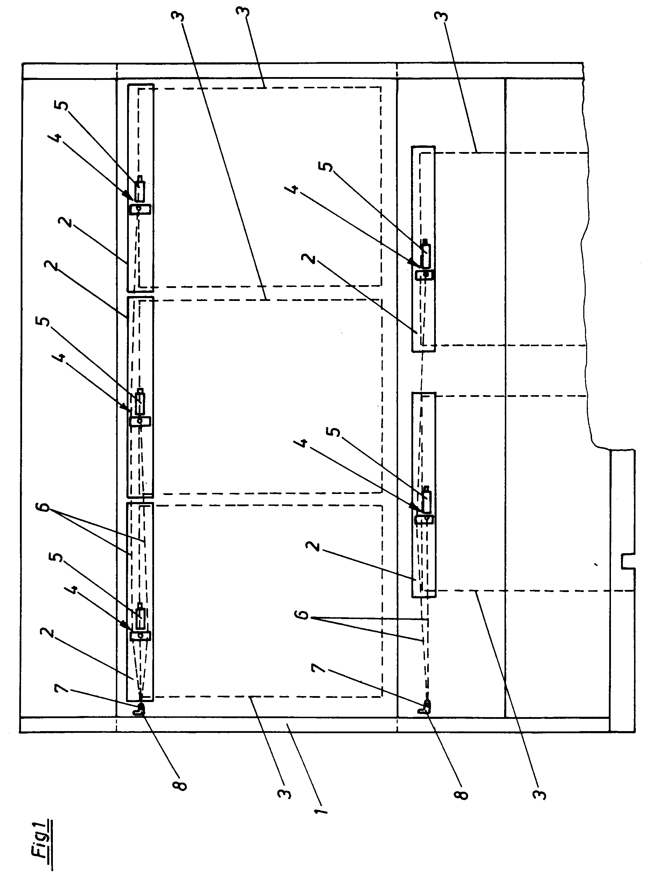

Fig. 1 zeigt eine Draufsicht auf eine Ladebordwand 1, die ein erstes Ausführungsbeispiel einer erfindungsgemäßen Abrollsicherungsvorrichtung aufweist.

Die Abrollsicherungsvorrichtung umfaßt in zwei Zeilen angeordnete, in die Transportebene der Ladebordwand 1 eingelassene Sicherungsklappen 2. Diese Sicherungsklappen 2 sind in zwei Zeilen angeordnet, wobei in der ersten, äußeren Zeile drei durchgehende Sicherungsklappen 2 nebeneinander angeordnet sind und in der zweiten Zeile zwei Sicherungsklappen 2, so daß in der zweiten Zeile, der Transportfläche des Lkw's benachbart, wie mit gestrichelten Linien angedeutet, zwei Rollcontainer 3 plaziert werden könnten und in der ersten Zeile drei Rollcontainer 3 nebeneinander plaziert werden könnten.

Unterhalb der jeweiligen Sicherungsklappe 2 ist jeweils schematisch eine Verriegelungseinrichtung 4 angedeutet, die sich etwa mittig unterhalb der jeweiligen Sicherungsklappe 2 befindet. Diese Verriegelungseinrichtung umfaßt jeweils einen Federriegel 5, der zur Entriegelung in Entriegelungsrichtung gezogen werden muß, bzw. es könnte in funktioneller Umkehrung auch der Riegel feststehen und die Riegelaufnahme gegen Federbelastung entriegelt werden. Diese Entriegelung erfolgt über mit gestrichelten Linien angedeutete Seilzüge 6. Durch diese Seilzüge 6 wird die Betätigungsmöglichkeit der Sicherungsklappen jeweils einer Zeile von Sicherungsklappen 2 einem gemeinsamen Betätigungshebel 7 zugeführt. Dieser Betätigungshebel 7 ist in einer L-förmigen Kulisse 8 geführt, so daß er durch Verschiebung und Verschwenkung in zwei verschiedene Betätigungsstellungen gebracht werden kann, wobei er in der zweiten, verschwenkten Stellung durch die L-Kulisse 8 verriegelt ist. In der ersten Stellung wird der Federriegel nur kurzzeitig gegen die Federbelastung entriegelt, in der zweiten Stellung wird durch die Einrastung des Betätigungshebels 7 ständig die Federbelastung aufgefangen und somit der Federriegel ständig in Entriegelungsstellung gehalten. Im ersten Fall würde die Sicherungsklappe 2 nach einem Heruntertreten sofort wieder einrasten. Im zweiten Falle würde sie auch nach einem Überfahren oder Heruntertreten auch automatisch selbsttätig wieder hochschwenken.

Außerdem ist aus der Fig. 1 erkennbar, daß die Betätigungshebel 7 in einem äußeren Randbereich der Ladebordwand 1 angeordnet sind, so daß sie den Ladevorgang nicht stören, selbst keiner Beschädigungsgefahr unterliegen, vom Benutzer leicht erreichbar sind und wegen Wegfalls mehrerer anderer Betätigungshebel ausreichend Platz ist, um in der ersten Zeile drei durchgehende Sicherungsklappen 2 nebeneinander anzuordnen.

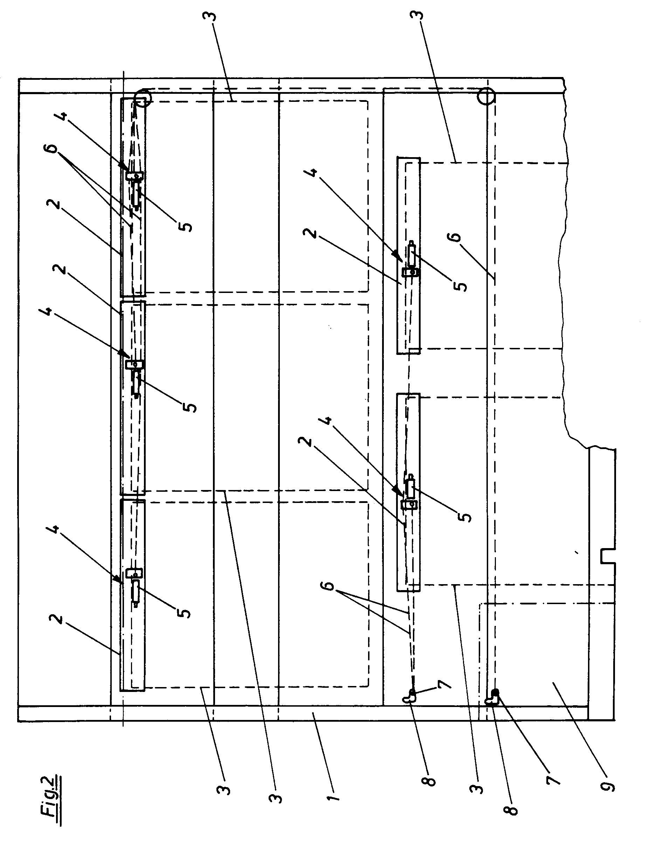

Die Fig. 2 zeigt eine entsprechende Draufsicht auf ein zweites Ausführungsbeispiel. Gleiche Bauelemente sind mit den gleichen Bezugszahlen bezeichnet, wie in Fig. 1.

In diesem Ausführungsbeispiel ist es durch weitergehende Umlenkung des Seilzuges 6 gelungen, den Betätigungshebel 7 für die erste, drei Sicherungsklappen 2 aufweisende Zeile in den Bedienungsbereich 9 der Ladebordwand hineinzuverlegen, so daß einem Benutzer zur Betätigung der ersten Zeile ein Weg erspart wird. Natürlich könnte auch der Bedienungshebel 7 der zweiten Zeile in den Bereich des Bedienungsplatzes 9 verlegt werden bzw. es könnten sogar beide Bedienungen zu einem einzigen Betätigungshebel 7 zusammengeführt werden.

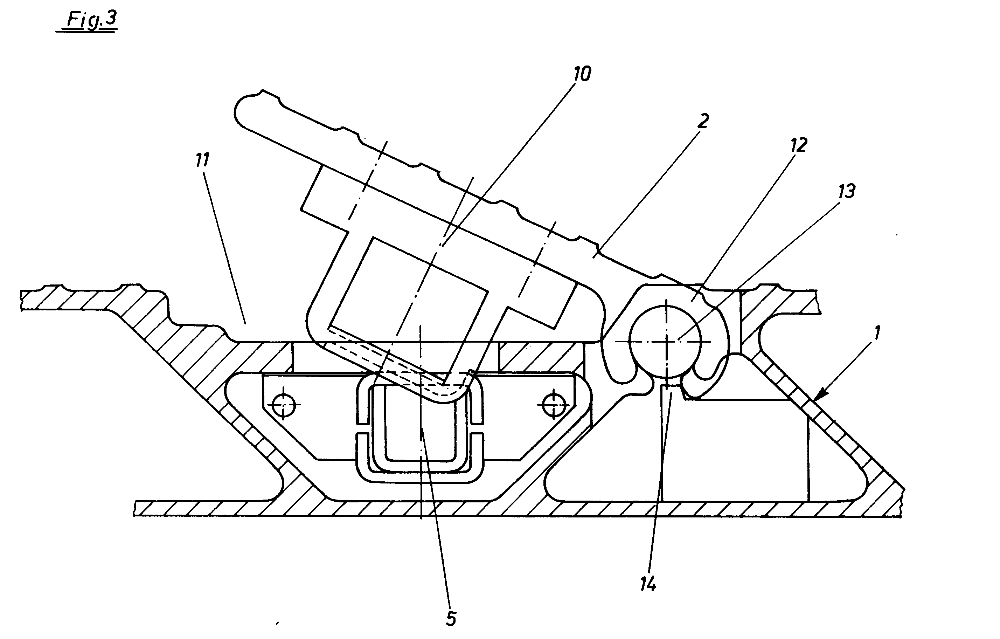

Fig. 3 zeigt einen Ausschnitt aus der Ladebordwand 1, und zwar eines Bereiches, der eine Sicherungsklappe 2 aufweist.

Der zu betätigende Federriegel 5 ist in dieser Darstellung in der Stirnansicht gezeigt. An der Sicherungsklappe 2 befindet sich die entsprechende Riegelaufnahme 10. Die Sicherungsklappe 2 ist in Öffnungsstellung gezeigt.

Aus der Fig. 3 ist zu erkennen, daß die Ladebordwand 1 doppelbödig bzw. als Doppelplatte ausgebildet ist, wobei im Bereich der Sicherungsklappe 2 eine Einsenkung 11 vorhanden ist, in die sich die Sicherungsklappe 2 in Schließstellung einschmiegt. Dabei ist die Ausführung so gewählt, daß die Doppelbödigkeit nur an den Stellen durchbrochen wird, wo es unbedingt notwendig ist, während ansonsten möglichst weitflächig auch der obere Boden trotz der Anbringung der Sicherungsklappe erhalten ist.

Die Sicherungsklappe 2 ist mit einer Umgreifung 12 an einer Schwenkachse 13 an der Ladebordwand 1 angelenkt. Die Umgreifung 12 ist ein spaltbreit offener Zylinder, also keine rundum geschlossene Lagerbuchse. In den offenen Spalt ragt eine Anschlagsbegrenzung 14 ein, die in der Ladebordwand 1 untergebracht ist und begrenzt dadurch den Öffnungswinkel der Sicherungsklappe 2 auf etwa 40°, so daß auch in Öffnungsstellung die Einsenkung 11 von der Sicherungsklappe 2 weitgehend verdeckt wird. Offen gehalten wird die Sicherungsklappe in herkömmlicher Weise durch eine nicht näher dargestellte Feder.

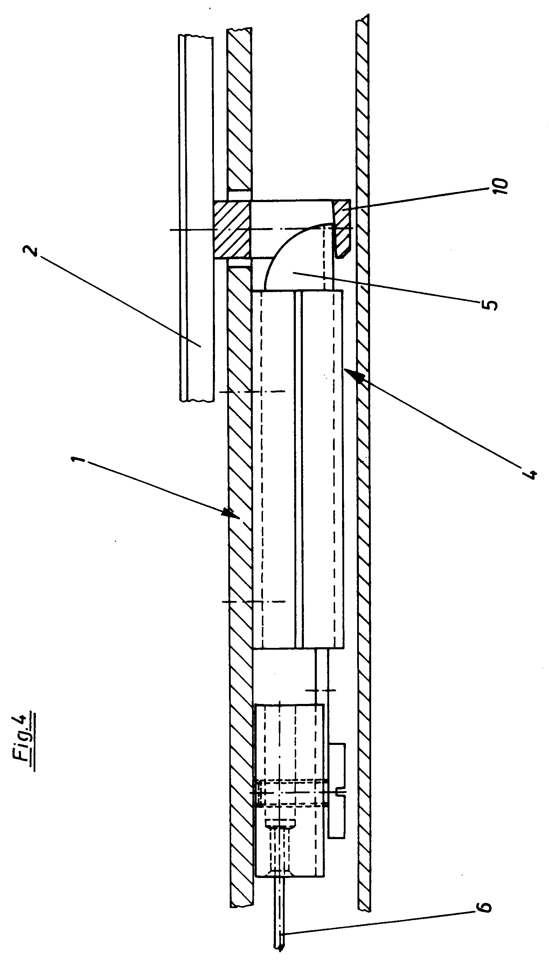

Fig. 4 zeigt den in Fig. 3 dargestellten Bereich in einer anderen Schnittansicht orthogonal zur Darstellung der Fig. 3. Gleiche Bauelemente sind mit den gleichen Bezugszahlen bezeichnet wie in Fig. 3.

Aus der Fig. 4 ist insbesondere erkennbar, wie der Federriegel 5 in die Riegelaufnahmen 10 eingreift und schnappriegelförmig ausgebildet ist, und wie der Seilzug 6 am Federriegel 5 angeordnet ist.

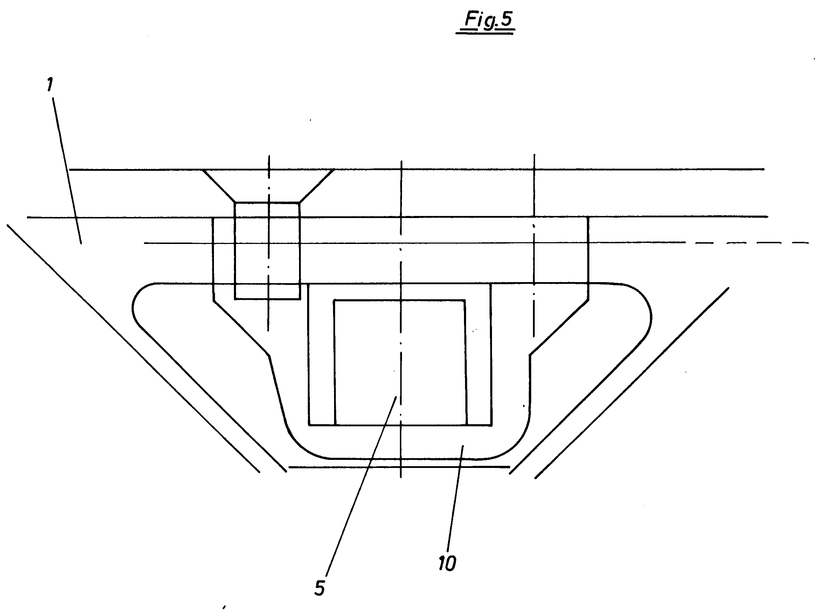

Fig. 5 zeigt eine Stirnansicht des Federriegels 5 mit einer Seitenansicht der Riegelaufnahme 10 zur Vervollständigung der Darstellungen der Fig. 3 und 4.

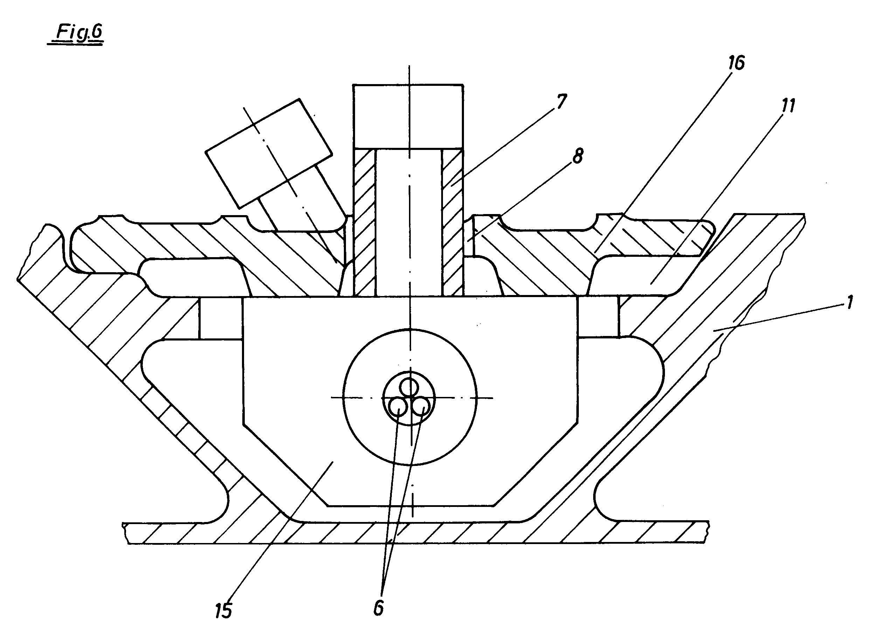

In Fig. 6 ist erkennbar, wie ein Betätigungshebel 7 zur Betätigung einer oder mehrerer Sicherungsklappen 2 in der Ladebordwand 1 angeordnet ist und in der L-förmigen Kulisse 8 geführt ist. Am Fuß 15 des Betätigungshebels 7, der in einem entsprechenden Hohlraum der Ladebordwand 1 geführt ist, enden die von den Verriegelungseinrichtungen 4 kommenden Seilzüge 6 mehrerer Sicherungsklappen 2. Es ist erkennbar, daß zum Betätigen der Verriegelungseinrichtung 4 über diese Seilzüge 6 der Betätigungshebel 7 in der Darstellung der Fig. 6 in die Figur hinein verschoben werden kann und dann axial zum Verlauf der Seilzüge 6 verschwenkt werden kann, nämlich in die entsprechende Ausbuchtung der L-förmigen Kulisse 8 hinein.

Außerdem ist aus der Figur 6 erkennbar, daß die auch im Bereich des Betätigungshebels 7 vorhandene Einsenkung 11 mit einem Füllstück 16 ausgefüllt ist, damit auch in diesem Bereich die Einsenkung 11 abgedeckt ist und eine ebene Transportfläche gegeben ist. Ein derartiges Füllstück 16 wird überall dort angeordnet, wo eine entsprechende Einsenkung 11 nicht durch eine Sicherungsklappe gefüllt wird. Es ist herstellungstechnisch einfacher, die Einsenkung 11 über die ganze Breite der Ladebordwand 1 durchlaufend vorzusehen und zwischen den Sicherungsklappen 2 entsprechende Füllstücke 16 einzulegen.

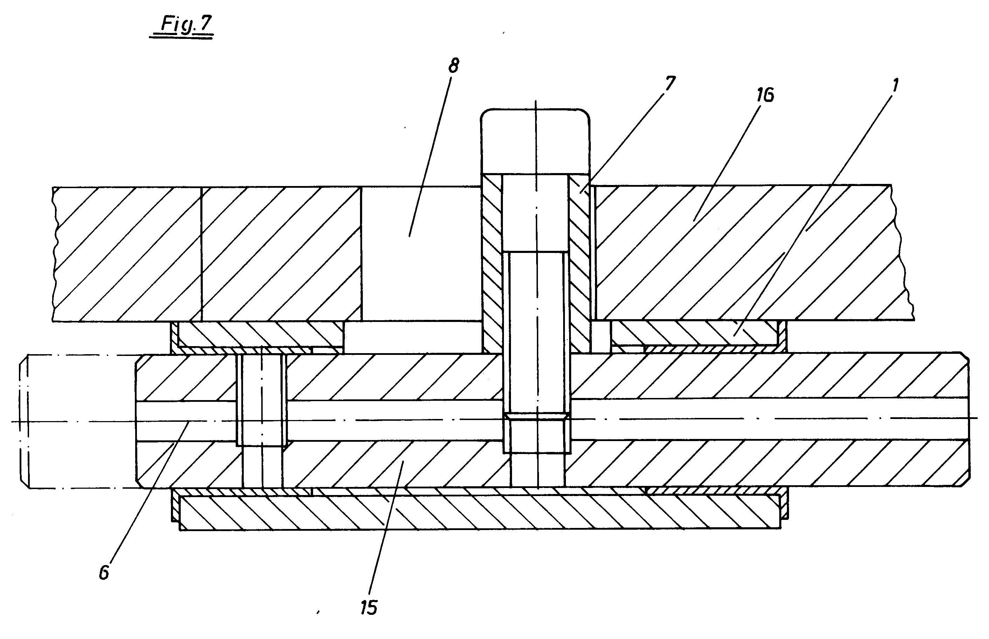

Fig. 7 zeigt eine zweite Ansicht des in Fig. 6 dargestellten Bereiches, nämlich mit dem Fuß 15 des Betätigungshebels 7 in Seitenansicht.

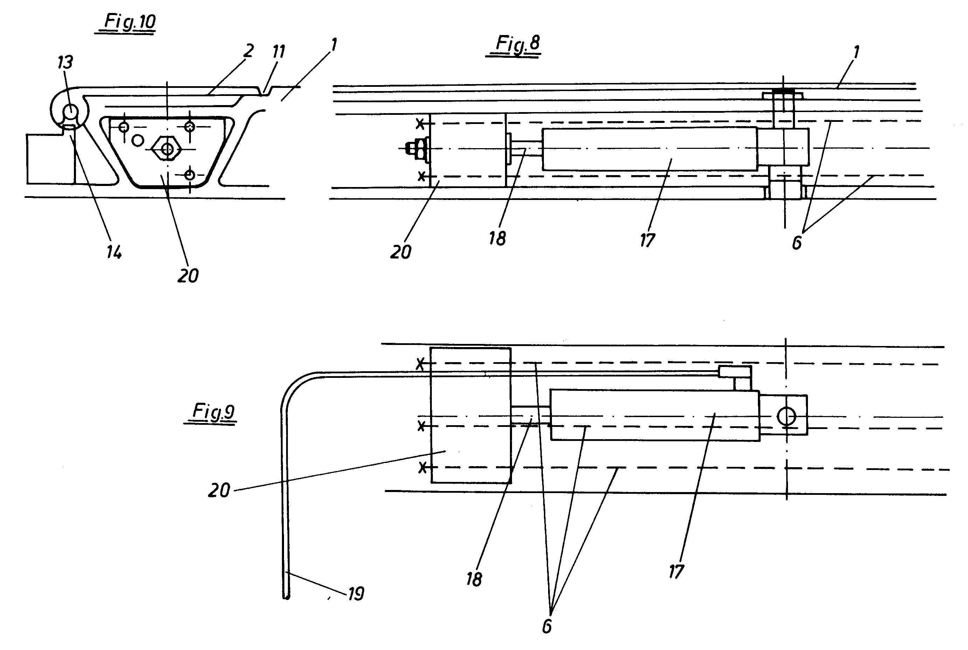

Fig. 8 zeigt eine ähnliche Darstellung, wie die Fig. 7. Diesmal ist allerdings als Betätigungsorgan statt eines Betätigungshebels 7 ein Pneumatikzylinder 17 vorgesehen, der in der Fig. 8, ähnlich wie der Fuß 16 des Betätigungshebels 7 in Fig. 7 in der Seitenansicht zu sehen ist, nämlich im Innenraum der Ladebordwand 1. Über eine Kolbenstange 18 kann der Pneumatikzylinder 17 die dort angeschlagenen Seilzüge 6 betätigen.

Fig. 9 zeigt denselben Pneumatikzylinder 17 in einer Draufsicht. Außerdem ist dort die Pneumatikzuleitung 19 angedeutet.

Fig. 10 zeigt die Verdickung 20 der Kolbenstange 18, an der die Seilzüge 6 angeschlagen sind, in ihrer Stirnansicht. Es ist insbesondere zu erkennen, daß diese Verdickung 20 genau geführt als trapezförmiges Gleitstück in einem Hohlraum der Ladebordwand 1 mit ebensolchem Querschnitt verschiebbar ist.

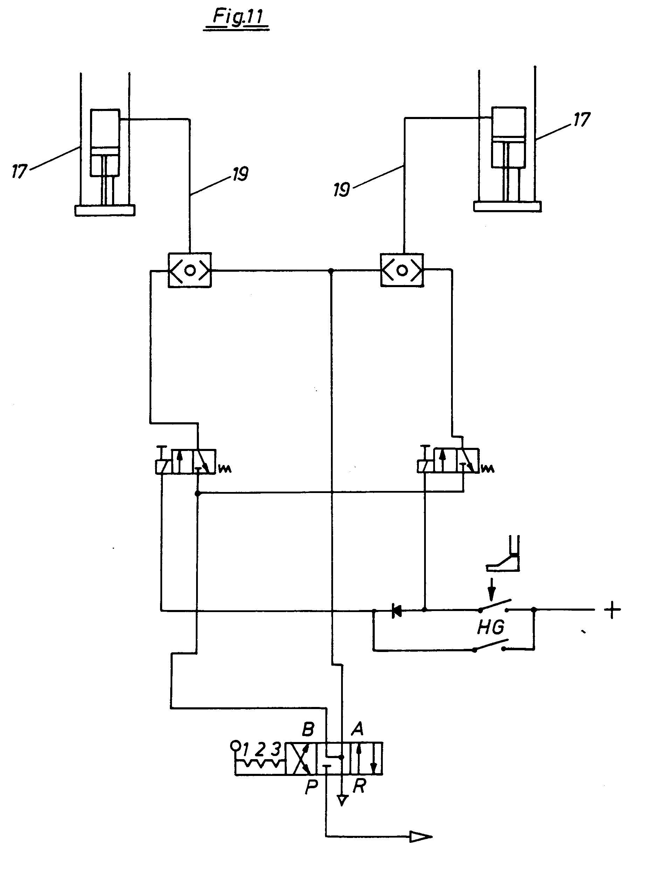

Fig. 11 zeigt schematisch einen Schaltplan für den Pneumatikkreislauf für Pneumatikzylinder 17 mit Zuleitungen 19. Wie aus der Schaltungstechnik dieses Schaltplanes ersichtlich, können auch die Pneumatikzylinder, genauso wie die in der L-förmigen Kulisse 8 geführten Betätigungshebel 7 so gesteuert werden, daß zwei Betätigungsfunktionen möglich sind, nämlich eine einmalige Belastung des Federriegels 5 zum Ausklinken der Riegelaufnahme 10 einer Sicherungsklappe 2 oder alternativ für eine ständige Belastung des Federriegels 5, um die Verriegelungseinrichtung 4 ständig geöffnet zu halten. Im ersten Falle würde die Sicherungsklappe 2 bei einem Niedertreten sofort wieder einrasten, wozu die Schnappriegelausbildung des Federriegels 5 sorgt. Im zweiten Falle würde die Sicherungsklappe 2 nach einem Niedertreten oder Überfahren sofort wieder selbsttätig in Öffnungsstellung gehen und einen in der Ladeposition befindlichen Rollbehälter 3 sichern. Deshalb ist die zweite Betätigungsfunktion für den Beladevorgang wünschenswert, während die erste Betätigungsfunktion für den Abladevorgang geeignet ist.

## Patentansprüche

1. Verfahren zum Sichern von Rollbehältern (3) oder ähnlichen rollfähigen Lasten gegen Abrollen von einer Transportvorrichtung, insbesondere von einer Ladebordwand (1), mittels einer Abrollsicherungseinrichtung, welche wenigstens zwei für zwei voneinander unabhängig auf- und abladbare, rollfähige Lasten (3) vorgesehene, aus der Transportebene der Transportvorrichtung hoch- und wieder in die Transportebene einklappbare Sicherungsklappen (2) umfaßt,
dadurch gekennzeichnet,
daß die wenigstens zwei unabhängig voneinander sichernden Sicherungsklappen (2) gemeinsam bzw. gleichzeitig betätigt, nämlich für ein Hochklappen entriegelt und in die Sicherungsstellung hochgeklappt werden.

2. Verfahren nach Anspruch 1, dadurch gekennzeichnet, daß bei in mehreren Zeilen angeordneten Sicherungsklappen (2) die Sicherungsklappen (2) einer Zeile gemeinsam bzw. gleichzeitig betätigt werden.

3. Verfahren nach Anspruch 1 oder 2, dadurch gekennzeichnet, daß alle vorhandenen Sicherungsklappen (2) in einem gemeinsamen Betätigungsbereich betätigt werden.

4. Vorrichtung zur Sicherung von Rollbehältern (3) oder sonstigen rollfähigen Lasten gegen ein Abrollen von der Transportebene einer Transporteinrichtung, insbesondere einer Ladebordwand (1) eines Lkw's,
umfassend wenigstens zwei für zwei voneinander unabhängig auf- und abladbare, rollfähige Lasten (3) vorgesehene, aus der Transportebene hoch- und wieder in die Transportebene einklappbare Sicherungsklappen (2), die in Öffnungsrichtung unter einer Belastung, vorzugsweise einer Federbelastung, stehen und eine sie in Schließstellung haltende, entriegelbare, vorzugsweise in Verriegelungsrichtung unter einer Belastung, vorzugsweise einer Federbelastung stehende Verriegelungseinrichtung (4) aufweisen
gekennzeichnet durch
ein gemeinsames Entriegelungsorgan (7,17) zur gemeinsamen bzw. gleichzeitigen Entriegelung wenigstens zweier Sicherungsklappen (2).

5. Vorrichtung nach Anspruch 4, dadurch gekennzeichnet, daß sie in wenigstens zwei Zeilen jeweils wenigstens zwei nebeneinander angeordnete Sicherungsklappen (2) zur Sicherung von zwei Zeilen von rollfähigen Lasten (3) aufweist und daß die zu einer Zeile gehörenden Sicherungsklappen (2) ein gemeinsames Betätigungsorgan (7,17) aufweisen.

6. Vorrichtung nach Anspruch 4 oder 5, dadurch gekennzeichnet, daß sämtliche Sicherungsklappen (2) einen gemeinsamen Betätigungsbereich für die Betätigungsorgane (7,17) aufweisen.

7. Vorrichtung nach Anspruch 5 oder 6, dadurch gekennzeichnet, daß wenigstens eine, vorzugsweise jede Sicherungsklappe (2) so lang ausgebildet ist, daß sie sich über die gesamte voraussichtliche Breite der zu sichernden Last (3) durchgehend erstreckt.

8. Vorrichtung, insbesondere nach Anspruch 7 und 5 oder 6, dadurch gekennzeichnet, daß in wenigstens einer Zeile zur Anordnung einer herkömmlichen Ladebordwand (1) drei sich jeweils über die Lastbreite erstreckende Sicherungsklappen (2) vorgesehen sind.

9. Vorrichtung, insbesondere nach einem oder mehreren der vorhergehenden Ansprüche 4 bis 8, dadurch gekennzeichnet, daß das bzw. jedes Betätigungsorgan ein Ar beitszylinder, vorzugsweise ein Pneumatikzylinder (17), ist.

10. Vorrichtung, insbesondere nach einem oder mehreren der vorhergehenden Ansprüche 4 bis 9, dadurch gekennzeichnet, daß das bzw. jedes Betätigungsorgan eine elektrische Einrichtung, vorzugsweise einen Elektromagneten, umfaßt.

11. Vorrichtung nach einem oder mehreren der vorhergehenden Ansprüche 4 bis 10, dadurch gekennzeichnet, daß für die Auslösung des Betätigungsorganes (7, 17) bzw. der Betätigungsorgane eine, vorzugsweise von der Betätigung und/oder vom Zustand der Transporteinrichtung (Ladebordwand 1) abhängige, vorzugsweise wahlweise zuschaltbare Zwangsauslösung vorgesehen und sichergestellt ist.

12. Vorrichtung nach einem oder mehreren der vorhergehenden Ansprüche 4 bis 11, dadurch gekennzeichnet, daß das Betätigungsorgan (7, 17) bzw. die Betätigungsorgane in einem oder mehreren Randbereichen oder außerhalb des Bereiches der Transportebene angeordnet ist bzw. sind.

13. Vorrichtung nach Anspruch 12, dadurch gekennzeichnet, daß die für alle Sicherungsklappen (2) gemeinsam vorgesehenen Betätigungsorgane (7, 17) im Bedienungsbereich der Transporteinrichtung, vorzugsweise im Standbereich (9) der Fußsteuerung einer Ladebordwand (1), angeordnet ist, vorzugsweise selbst ebenfalls als Fußbetätigungsorgane ausgebildet sind.

14. Vorrichtung nach einem oder mehreren der vorhergehenden Ansprüche 4 bis 13, dadurch gekennzeichnet, daß die der jeweiligen Sicherungsklappe (2) zugeordnete Verriegelungseinrichtung (4) unterhalb der Transportebene unterhalb der zugeordneten Sicherungsklappe (2) vorzugsweise bezüglich der Längserstreckung der Sicherungsklappe (2) etwa mittig, untergebracht ist.

15. Vorrichtung nach einem oder mehreren der vorhergehenden Ansprüche 4 bis 14, dadurch gekennzeichnet, daß das Betätigungsorgan (7, 17) und die zu betätigende Verriegelungseinrichtung (4) bzw. zu betätigenden Verriegelungseinrichtungen über einen oder mehrere Zugelemente, vorzugsweise Seilzüge (6) miteinander verbunden sind.

16. Vorrichtung, insbesondere nach einem oder mehreren der vorhergehenden Ansprüche 4 bis 15, dadurch gekennzeichnet, daß das bzw. jedes Betätigungsorgan (7, 17) wenigstens zwei Betätigungsstellungen bzw. Funktionen aufweist, nämlich eine, in der die Verriegelungseinrichtung (4) einmal entriegelt ist, aber weiterhin unter ihrer (Feder-)Belastung verbleibt und in Schließstellung wieder (selbsttätig) verriegelt, und eine in der die Verriegelungseinrichtung (4) entriegelt und die (Feder-) Belastung aufgehoben bzw. aufgefangen ist.

17. Vorrichtung nach Anspruch 16, dadurch gekennzeichnet, daß als Betätigungsorgan ein Betätigungshebel (7) vorgesehen ist, der in einer die zwei Stellungen vorgebenden, vorzugsweise etwa L-förmigen Kulisse (8) geführt ist.

18. Vorrichtung nach einem oder mehreren der vorhergehenden Ansprüche 4 bis 17, dadurch gekennzeichnet, daß die Transportebene aus einer weitgehend hohlen Doppelplatte besteht und daß Elemente der Verriegelungs- und/oder der Betätigungseinrichtung (4, 6, 7, 17) in Hohlräumen der Doppelplatte untergebracht sind.

19. Vorrichtung, insbesondere nach einem oder mehreren der vorhergehenden Ansprüche 4 bis 18, dadurch gekennzeichnet, daß die Transportebene aus einer weitgehend hohlen Doppelplatte besteht, daß die obere Plattenwandung im Bereich der Sicherungsklappe (2) eine Einsenkung (11) bildend abgesenkt ist und daß die Sicherungsklappe (2) so angeordnet ist, daß sie sich in Schließstellung mit der Transportebene bündig fluchtend in dieses Einsenkung (11) einpaßt.

20. Vorrichtung, vorzugsweise nach einem oder mehreren der vorhergehenden Ansprüche 4 bis 19, dadurch gekennzeichnet, daß für die bzw. jede Sicherungsklappe (2) eine Öffnungsstellung vorgesehen ist, bei der sie mit der Transportebene einen Winkel < 90°, vorzugsweise von etwa 40°, bildet.

21. Vorrichtung, vorzugsweise nach einem oder mehreren der vorhergehenden Ansprüche 4 bis 20, dadurch gekennzeichnet, daß für die bzw. jede Sicherungsklappe an der Öffnungsseite ein Öffnungs-Vertikalmaß von etwa 34 bis 38 mm vorgesehen ist.

22. Vorrichtung nach Anspruch 20 oder 21, gekennzeichnet durch eine die Öffnungsstellung festlegende Anschlagsbegrenzung (14) für die Sicherungsklappe (2).

23. Vorrichtung nach Anspruch 22, dadurch gekennzeichnet, daß die Anschlagsbegrenzung (14) unterhalb der Transportebene so angeordnet ist, daß sie in der Nähe der Schwenkachse (13) in den Schwenkweg der Sicherungsklappe (2), vorzugsweise ihres Schwenklagers (12), einragt.

24. Vorrichtung nach Anspruch 22 oder 23, dadurch gekennzeichnet, daß mehrere Anschlagsbegrenzungen (14) vorgesehen sind, von denen eine etwas früher in Funktion tritt, aber so elastisch ausgebildet ist, daß sie bis zur Funktion der anderen Anschlagsbegrenzung(en) nachgibt.

25. Vorrichtung nach einem oder mehreren der Ansprüche 4 bis 24, gekennzeichnet durch schalldämpfende Dämpfungselemente im Schließbereich jeder Sicherungsklappe (2).

## Claims

1. A method of securing roller containers (3) or similar rollable loads from rolling off a transporting device, in particular off a loading-board gate (1), by means of a device to prevent rolling off, which comprises at least two safety flaps (2) which are provided for two rollable loads (3) loadable and unloadable independently of each other and which can be swung up from the transportation plane of the transporting device and can be swung back into the transportation plane, **characterized in that** the at least two safety flaps (2) which fasten independently of each other are actuated jointly or simultaneously, namely are unlocked for folding up and are swung up into the fastening position.

2. A method according to Claim 1, **characterized in that** in the case of safety flaps (2) arranged in a plurality of rows the safety flaps (2) of one row are actuated jointly or simultaneously.

3. A method according to Claim 1 or 2, **characterized in that** all the safety flaps (2) present are actuated in a common actuation region.

4. A device for securing roller containers (3) or similar rollable loads from rolling off the transportation plane of a transporting device, in particular off a loading-board gate (1) of a lorry, comprising at least two safety flaps (2) which are provided for two rollable loads (3) loadable and unloadable independently of each other and which can be swung up from the transportation plane of the transporting device and can be swung back into the transportation plane again and which are loaded, and preferably spring-loaded, in the opening direction and comprise an unlockable locking device (4) which holds them in the closed position and which is preferably loaded, and preferably spring-loaded, in the locking direction, **characterized by** a common unlocking member (7, 17) for jointly or simultaneously unlocking at least two safety flaps (2).

5. A device according to Claim 4, **characterized in that** in at least two rows it comprises at least two safety flaps (2) arranged adjacent to each other in each case for securing two rows of rollable loads (3), and the safety flaps (2) belonging to a row have a common actuating member (7, 17).

6. A device according to Claim 4 or 5, **characterized in that** all the safety flaps (2) have a common actuation region for the actuating members (7, 17).

7. A device according to Claim 5 or 6, **characterized in that** at least one, and preferably each, safety flap (2) is made so long that it extends continuously over the entire anticipated width of the load (3) to be secured.

8. A device, in particular according to Claim 7 and 5 or 6, **characterized in that** three safety flaps (2) each extending over the width of the load are provided in at least one row for the arrangement of a conventional loading-board gate (1).

9. A device, in particular according to one or more of the preceding Claims 4 to 8, **characterized in that** the or each actuating member is a working cylinder, and preferably a pneumatic cylinder (17).

10. A device, in particular according to one or more of the preceding Claims 4 to 9, **characterized in that** the or each actuating member comprises an electrical device, and preferably an electromagnet.

11. A device according to one or more of the preceding Claims 4 to 10, **characterized in that** a preferably optionally engageable forcible activating means preferably dependent on the actuation and/or upon the state of the transporting device (loading-board gate 1) is provided and secured in order to activate the actuating member (7, 17) or members.

12. A device according to one or more of the preceding Claims 4 to 11, **characterized in that** the actuating member (7, 17) or members is or are arranged in an edge area or in a plurality of edge areas or outside the region of the transportation plane.

13. A device according to Claim 12, **characterized in that** the actuating members (7, 17) provided jointly for all the safety flaps (2) [are] arranged in the operating area of the transporting device, preferably in the standing region (9) of the foot control of a loading-board gate (1), and are preferably likewise formed themselves as foot-actuating members.

14. A device according to one or more of the preceding Claims 4 to 13, **characterized in that** the locking device (4) associated with the respective safety flap (2) is situated below the transportation plane below the associated safety flap (2), and preferably approximately centrally with respect to the longitudinal extension of the safety flap (2).

15. A device according to one or more of the preceding Claims 4 to 14, **characterized in that** the actuating device (7, 17) and the locking device (4) or devices to be actuated are connected together by way of one or more traction members, preferably cable lines (6).

16. A device, in particular according to one or more of the preceding Claims 4 to 15, **characterized in that** the or each actuating member (7, 17) has at least two actuating settings or functions, namely one in which the locking device (4) is locked once but continues to remain under its (spring-) loading and is (automatically) locked again in the closed position, and one in which the locking device (4) is unlocked and the (spring-) loading is discontinued or suspended.

17. A device according to Claim 16, **characterized in that** an actuating lever (7), which is guided in a preferably approximately L-shaped slotted guide (8) defining two positions, is provided as the actuating member.

18. A device according to one or more of the preceding Claims 4 to 17, **characterized in that** the transportation plane comprises a substantially hollow double plate, and elements of the locking and/or actuating device (4, 6, 7, 17) are arranged in cavities in the double plate.

19. A device, in particular according to one or more of the preceding Claims 4 to 18, **characterized in that** the transportation plane comprises a substantially hollow double plate, the upper wall of the plate is recessed in the region of the safety flap (2) so as to form a depression (11), and the safety flap (2) is arranged in such a way that in the closed position it fits into the said depression (11) while being in flush alignment with the transportation plane.

20. A device, preferably according to one or more of the preceding Claims 4 to 19, **characterized in that** the or each safety flap (2) has an opening position, in which it forms an angle of < 90°, preferably of approximately 40°, with the transportation plane.

21. A device, preferably according to one or more of the preceding Claims 4 to 20, **characterized in that** a vertical opening dimension of from approximately 34 to 38 mm is provided on the opening side for the or each safety flap.

22. A device according to Claim 20 or 21, **characterized by** a stop limit (14) - determining the opening position - for the safety flap (2).

23. A device according to Claim 22, **characterized in that** the stop limit (14) is arranged below the transportation plane in such a way that in the vicinity of the pivot axis (13) it projects into the pivoting path of the safety flap (2), preferably of its pivot bearing (12).

24. A device according to Claim 22 or 23, **characterized in that** a plurality of stop limits (14) are provided, of which one comes into action slightly earlier, but is made so resilient that it yields until the other stop limit or limits comes or come into effect.

25. A device according to one or more of Claims 4 to 24, **characterized by** sound-proofing damping members in the closure region of each safety flap (2).

## Revendications

1. Procédé destiné à empêcher des conteneurs roulants (3) ou des charges roulantes similaires de rouler d'un dispositif de transport, en particulier d'un hayon de chargement (1), au moyen d'un dispositif de protection contre le roulement, qui comprend au moins deux volets de protection (2) pouvant être relevés du plan de transport du dispositif de transport et à nouveau rabattus dans le plan de transport, prévus pour deux charges (3) roulantes, à charger et à décharger indépendamment l'une de l'autre,
caractérisé
en ce que les au moins deux volets de protection (2) à bloquer indépendamment l'un de l'autre sont actionnés conjointement ou simultanément, à savoir déverrouillés pour un relèvement et relevés dans la position de blocage.

2. Procédé selon la revendication 1, caractérisé en ce que dans le cas de volets de protection (2), placés sur plusieurs rangées, les volets de protection (2) d'une rangée sont actionnés conjointement ou simultanément.

3. Procédé selon la revendication 1 ou 2, caractérisé en ce que tous les volets de protection (2) existants sont actionnés dans une zone d'actionnement commune.

4. Dispositif destiné à empêcher des conteneurs roulants (3) ou des charges roulantes similaires de rouler d'un dispositif de transport, en particulier d'un hayon de chargement (1) d'un camion,
comprenant au moins deux volets de protection (2) pouvant être relevés du plan de transport du dispositif de transport et à nouveau rabattus dans le plan de transport, prévus pour deux charges (3) roulantes, à charger et à décharger indépendamment l'une de l'autre, qui dans le sens d'ouverture sont soumis à une sollicitation, en particulier une sollicitation par un ressort et comportent un dispositif de verrouillage (4) les maintenant en position de fermeture, déverrouillables, soumis de préférence dans le sens de verrouillage à une sollicitation, de préférence à une sollicitation par un ressort,
caractérisé par
un organe de déverrouillage (7, 17) commun pour le déverrouillage commun ou simultané d'au moins deux volets de protection (2).

5. Dispositif selon la revendication 4, caractérisé en ce qu'il comporte dans au moins deux rangées chaque fois au moins deux volets de protection (2) juxtaposés pour le blocage de deux rangées de charges (3) roulantes et en ce que les volets de protection (2), faisant partie d'une rangée, comportent un organe d'actionnement (7, 17) commun.

6. Dispositif selon la revendication 4 ou 5, caractérisé en ce que tous les volets de protection (2) présentent une zone d'actionnement commune pour les organes d'actionnement (7, 17).

7. Dispositif selon la revendication 5 ou 6, caractérisé en ce qu'au moins un, de préférence chaque volet de protection (2) est suffisamment long pour s'étendre en continu sur toute la longueur prévisible de la charge (3) à bloquer.

8. Dispositif, en particulier selon les revendications 7 et 5 ou 6, caractérisé en ce que dans au moins une rangée sont prévus, pour la constitution d'un hayon de chargement (1) classique, trois volets de protection (2) s'étendant chacun sur la largeur de la charge.

9. Dispositif, en particulier selon une ou plusieurs des revendications 4 à 8 précédentes, caractérisé en ce que le ou chaque organe d'actionnement est un vérin, de préférence un vérin pneumatique (17).

10. Dispositif, en particulier selon une ou plusieurs des revendications 4 à 9 précédentes, caractérisé en ce que le ou chaque organe d'actionnement comprend un dispositif électrique, de préférence un électro-aimant.

11. Dispositif selon une ou plusieurs des revendications 4 à 10 précédentes, caractérisé en ce que pour le déclenchement de l'organe d'actionnement (7, 17) ou des organes d'actionnement, il est prévu et assuré un déclenchement forcé à commander de préférence en option, dépendant de préférence de l'actionnement et/ou de l'état du dispositif de transport (hayon de chargement 1).

12. Dispositif selon une ou plusieurs des revendications 4 à 11 précédentes, caractérisé en ce que l'organe d'actionnement (7, 17) ou les organes d'actionnement est ou sont placé(s) dans une ou plusieurs zones de bordure ou à l'extérieur de la zone du plan de transport.

13. Dispositif selon la revendication 12, caractérisé en ce que les organes d'actionnement (7, 17), prévus conjointement pour tous les volets de protection (2), sont placés dans la zone de commande du dispositif de transport, de préférence dans la zone du poste (9) de la commande à pied d'un hayon de chargement (1), de préférence conformés eux-mêmes également en tant qu'organes d'actionnement à pied.

14. Dispositif selon une ou plusieurs des revendications 4 à 13 précédentes, caractérisé en ce que le dispositif de verrouillage (4), associé au volet de protection (2) respectif, est logé au-dessous du plan de transport au-dessous du volet de protection correspondant, de préférence à peu près au milieu par rapport à l'extension longitudinale du volet de protection (2).

15. Dispositif selon une ou plusieurs des revendications 4 à 14 précédentes, caractérisé en ce que l'organe d'actionnement (7, 17) et le dispositif de verrouillage (4) à actionner ou les dispositifs de verrouillage à actionner sont reliés entre eux par un ou plusieurs éléments de traction, de préférence des câbles de traction (6).

16. Dispositif, en particulier selon une ou plusieurs des revendications 4 à 15 précédentes, caractérisé en ce que le ou chaque organe d'actionnement (7, 17) comporte au moins deux positions d'actionnement ou fonction, à savoir une dans laquelle le dispositif de verrouillage (4) est déverrouillé une fois, mais reste encore sous la sollicitation (de son ressort) et est à nouveau (automatiquement) verrouillé en position de fermeture, et une dans laquelle le dispositif de verrouillage (4) est déverrouillé et la sollicitation (par ressort) est supprimée ou absorbée.

17. Dispositif selon la revendication 16, caractérisé en ce qu'il est prévu comme organe d'actionnement un levier d'actionnement (7), qui est guidé dans une coulisse (8), de préférence à peu près en L, imposant les deux positions.

18. Dispositif selon une ou plusieurs des revendications 4 à 17 précédentes, caractérisé en ce que le plan de transport est constitué d'une double plaque presque entièrement creuse et en ce que des éléments du dispositif de verrouillage et/ou du dispositif d'actionnement (4, 6, 7, 17) sont logés dans la cavité de la double plaque.

19. Dispositif en particulier selon une ou plusieurs des revendications 4 à 18 précédentes, caractérisé en ce que le plan de transport est constitué d'une double plaque presque entièrement creuse, en ce que la paroi supérieure de la plaque est enfoncée dans la zone du volet de protection (2) pour former un enfoncement (11) et en ce que le volet de protection (2) est disposé de manière qu'en position de fermeture il soit aligné à fleur avec le plan de transport et s'ajuste dans cet enfoncement (11).

20. Dispositif de préférence selon une ou plusieurs des revendications 4 à 19 précédentes, caractérisé en ce que pour le ou chaque volet de protection (2) il est prévu une position d'ouverture, dans laquelle il forme, avec le plan de transport, un angle < 90°, de préférence égal à environ 40°.

21. Dispositif de préférence selon une ou plusieurs des revendications 4 à 20 précédentes, caractérisé en ce que pour le ou chaque volet de protection il est prévu, sur le coté d'ouverture, une cote verticale d'ouverture d'environ 34 à 38 mm.

22. Dispositif selon la revendication 20 ou 21, caractérisé par une limitation par butée (14), fixant la position d'ouverture pour le volet de protection (2).

23. Dispositif selon la revendication 22, caractérisé en ce que la limitation par butée (14) est située au-dessous du plan de transport, de manière à pénétrer, à proximité de l'axe de pivotement (13), dans le parcours de pivotement du volet de protection (2), de préférence de son palier de pivotement (2).

24. Dispositif selon la revendication 22 ou 23, caractérisé en ce que plusieurs limitations par butée (14) sont prévues, dont une entre en fonction légèrement plus tôt, mais est suffisamment élastique pour céder jusqu'au fonctionnement de l'autre (des autres) limitation(s) par butée.

25. Dispositif selon une ou plusieurs des revendications 4 à 24, caractérisé par des éléments d'amortissement de bruit dans la zone de fermeture de chaque volet de protection (2).
